# EUROPEAN PATENT SPECIFICATION

(11) **EP 0 662 040 B1**
(45) Date of publication and mention of the grant of the patent: **12.11.1997**
(21) Application number: 93918844.7
(22) Date of filing: 08.09.1993
(51) Int. Cl.: B29C 65/34

(54) **ELECTRIC FUSION WELDING OF THERMOPLASTIC MATERIALS**
ELEKTRO-SCHMELZSCHWEISSEN VON THERMOPLASTISCHEN MATERIALIEN
SOUDURE DE MATERIAUX THERMOPLASTIQUES PAR FUSION ELECTRIQUE

(30) Priority: 08.09.1992 US 941662
(43) Date of publication of application: 12.07.1995
(73) Proprietor: E. O. Butts Consultants Ltd., Nepean Ontario K2E 6T6 (CA)
(72) Inventor: BUTTS, Ernest, O., Ottawa, Ontario K2B 8E1 (CA); BUTTS, Nicholas, E., Kanata, Ontario K2L 2Y7 (CA); PINDER, Robert, Ottawa, Ontario K2B 5S1 (CA)
(74) Representative: Howden, Christopher Andrew
(86) International application number: CA9300363
(87) International publication number: WO9405485

(56) References cited:
- EP-A- 0 278 768
- CA-A- 837 562
- DE-A- 3 712 355
- US-A- 3 061 503

## Description

### FIELD OF THE INVENTION

The present invention relates to the welding of members of thermoplastic materials including polyethylene, polyvinyl chloride, nylons, polypropylene, acetals, and the like.

### BACKGROUND OF THE INVENTION

Thermoplastic materials including polyethylene, polyvinyl chloride, nylons, polypropylene, acetals, and the like have become increasingly important as materials of construction because of their moldability, ease of handling, light weight, and ability to withstand corrosion.

In many applications however, mechanical joints such as threaded joints are unacceptable because they are not fluidtight. This is particularly of concern in the handling of hazardous materials and waste.

Numerous techniques have therefore been developed for the joining of thermoplastic materials including welding and the use of adhesives. The use of adhesives or solvents for making joints in plastic pipe, etc. is inconvenient in field applications where conditions are not ideal and where the time and other factors required to develop the maximum bond strength may not be available. Moreover, it may be impossible to find a suitable adhesive for the thermoplastic material.

Polyethylene has in the past been welded by techniques such as extrusion welding using a tool which applies heat to overlapped sheets of the thermoplastic material, and extrudes a bead of thermoplastic material at the edge of the lap. The bead of thermoplastic material is intended to fuse with the preheated sheets of the thermoplastic to form a liquid fusion of the two sheets and the extrudate to weld the overlapped sheets. This technique has not proven entirely satisfactory in practice because of a lack of uniformity in the welding process especially where hand held extrusion welding tools are used on large sheets of material.

Another technique known in the prior art involves the use of a so-called "speed-tip" for welding sheets of thermoplastic material in which a welding rod of the thermoplastic material is fed through the nozzle of a hot air gun. The stream of hot air together with the melted thermoplastic are applied to the area to be welded. Once again problems of uniformity and completeness of weld are evident. Frequently such welds include pinholes or unwelded portions and can also include portions in which excess heat has been applied and the thermoplastic material damaged. Obviously, damaged and incomplete welds are most undesirable.

A further technique utilizes a hot wedge which is passed between the sheets of thermoplastic material to heat the opposite faces which are then pressed together to form a bond.

A number of electrically heated techniques for forming either lap or butt welds between two members of a thermoplastic material have been attempted in the past.

One technique involves the use of a bare wire or metal strip which is placed between the two members of thermoplastic material. This method is disclosed in the teachings of the following United States Patents: 2,243.506 (Mitchell); 2,647,072 (Smith); 2,742,390 (Beck); 2,974,566 (Hurley); 3,049,465 (Wilkins); 3,061,503 (Gould); 3,348,640 (Thompson); 4,416,713 (Brooks); 4,176,274 (Lippera); and 4,375,591 (Sturm).

The present inventors have had experience in the welding of thermoplastic members without the supply of new material and have found that the wire can actually burn holes in the thermoplastic material of the members being welded. Accordingly it is very important to supply new material when welding two thermoplastic members.

Some other forms of welding rods have been disclosed in which wire or metal strips are coated in a relatively thick layer of thermoplastic material. This type of welding rod is disclosed in the following patents: US 2,983.306 (Resnick); US 3,506,519 and CA 837,562 (Blumenkranz); US 3,378,672 and CA811,837 (Blumenkranz); FR 1.072.800; and DE 37 12355 A1.

The present inventors have found that this type of welding rod results in the element being too remote from the surfaces to be welded. The plastic immediately surrounding the wire or metal strips burns before the material of the thermoplastic members melts. The weld, if formed, is of poor quality.

French Patent Number 1,072,800, also describes the use of an adhesive to hold the welding rod in place on one sheet before applying the second sheet and welding the sheets together. The present inventors have tried this method of holding the welding rod in place. They have found that the use of adhesives or double-sided tape adversely affects the integrity of the weld because the adhesive and double-sided tape, act as a contaminants. These contaminants prohibit the intermolecular bonding that is desired between the thermoplastic members being joined and the welding rod.

The present application consitutes an improvement over our prior European application 0 278 768 A2 in requiring a solid homogenous core of circular cross-section, wound with a plurality of pairs of wires in a helical pattern with the wires embedded in the core proximate the surface thereof.

Many of the prior art techniques have only limited applications and are limited to the welding of certain shapes.

### SUMMARY OF THE INVENTION

The present invention aims to overcome the disadvantages of the prior art by providing an improved welding rod,, a method and apparatus for forming the welding rod, and methods of use of the welding rod. The welding rod is formed of a resistance element and a solid homogeneous core of thermoplastic material which provides a supply of thermoplastic material to the weld between two adjacent thermoplastic members. The resistance element is formed of a number of wires either wrapped in a helical pattern or braided around the solid core.

The resistance element is then embedded in the solid core to draw the wires just below the surface of the solid core. Alternatively, the resistance element and the solid core are coated in a thin layer of thermoplastic material. The welding rod of the present invention provides a better distribution of heat and reduces the risk of overheating and burning of the thermoplastic, both of the solid core and the members being joined, which can adversely affect the quality of the weld. A double welding rod is also disclosed which can be formed into a variety of shapes to adapt to many different applications.

In use the welding rod is positioned between the thermoplastic members to be welded and an electrical current is applied to the resistance element. Simultaneously, the members to be welded are pressed together. The electrical current is applied for a time and at an intensity to cause the solid core and portions of the thermoplastic material of the adjacent members to soften and fuse thereby welding the two members together. The resistance element forms a mechanical reinforcement in the weld thereby rendering a superior weld between the thermoplastic members.

There is also disclosed a method for welding of adjacent members of thermoplastic material wherein the welding rod is pre-attached to one of the adjacent members of thermoplastic material.

The welding rod and process for electric fusion welding of the present invention is very versatile, providing a means for the welding together of different shapes and sizes of thermoplastic members.

### BRIEF DESCRIPTION OF THE DRAWINGS

In the accompanying drawings which illustrate embodiments of the present invention:
Figure 1 is a perspective view of a welding rod in accordance with the present invention,
Figure 2 is a cross-sectional view of the welding rod of Figure 1 taken along the line 2-2,
Figure 3 is a schematic diagram of an apparatus for forming the welding rod,
Figure 4 is a perspective view of a welding rod at Stage A of production shown in Figure 3,
Figure 5 is a cross-sectional view of the welding rod of Figure 4,
Figure 6 is a perspective view of a terminal pin,
Figure 7 illustrates the general procedure used to form a lap joint of thermoplastic material using the welding rod of Figure 1.
Figure 8 is a cross-sectional view of the completed weld of Figure 7,
Figure 9 illustrates a butt weld between curved members such as for a longitudinal butt weld on a pipe,
Figure 10 illustrates the weld of Figure 9 on completion,
Figure 11 is a perspective view illustrating the use of the invention in performing a transverse butt weld on piping,
Figure 12 is a perspective view of an alternative embodiment of the welding rod of Figure 11,
Figure, 13 is a top plan view of a welding rod pre-attached to a thermoplastic member,
Figure 14 is a perspective view of an alternative embodiment of a welding rod pre-attached to a thermoplastic member,
Figure 15 is a perspective view illustrating the use of a fusion ring for a transverse butt weld with a socket fitting of pipe sections,
Figure 16 is a cross-sectional view of Figure 15,
Figure 17 is a perspective view of an alternative embodiment of the fusion ring,
Figure 18 is a front elevational view of the fusion ring of Figure 17,
Figure 19 is a cross-sectional view of Figure 15 with a rabbet fitting of the pipe sections,
Figure 20 is a perspective view of a flattened double welding rod, and
Figure 21 illustrates the use of the flattened double welding rod of Figure 20 to repair a seam between two thermoplastic sheets.

### DESCRIPTION OF THE PREFERRED EMBODIMENTS

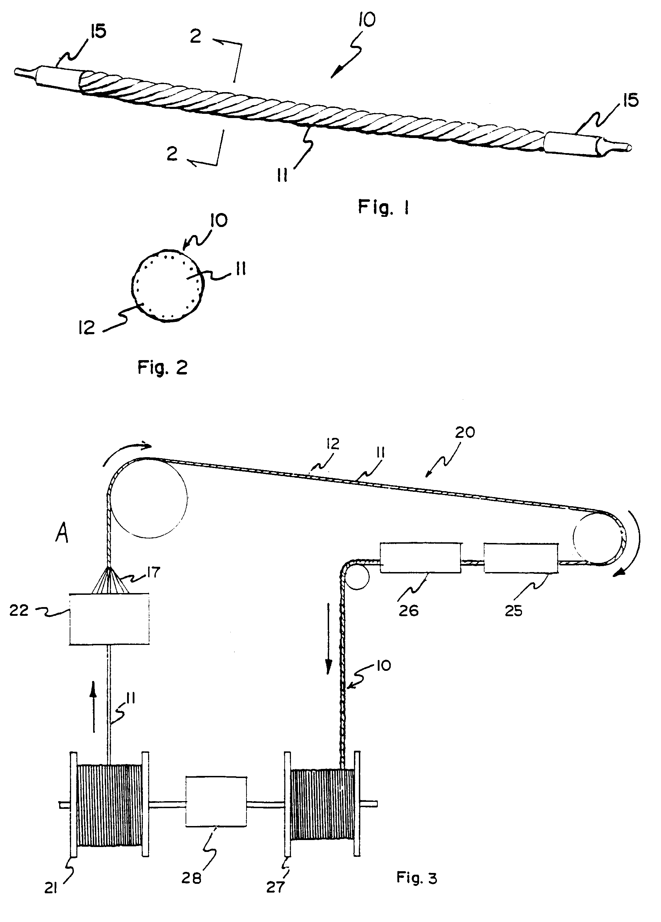

Figures 1 and 2 illustrate the welding rod 10 of the present invention. The welding rod 10 is formed of a solid core 11 of thermoplastic material and a resistance element 12. The resistance element 12 is connected to terminal pins 15 at each end of the welding rod 10 for subsequent connection to a power supply (not shown).

The choice of materials and the dimensions of the solid core 11 and the resistance element 12 are dependent on the requirements of a particular application. For example the solid core 11 may be formed of thermoplastic materials including polyethylene, polyvinyl chloride, nylons, polypropylene, acetals, and the like. In turn, the resistance element 12 may be formed of conducting metals including stainless steel, nichrome, iron, tin-copper alloy, and the like.

For the purposes of this description, the solid core 11 is formed of high density polyethylene (HDPE) and the resistance element 12 is formed of stainless steel. The dimensions of the solid core 11 and the resistance element 12 presented in this discussion are chosen to provide a preferred embodiment of the present invention. It will be understood that these dimensions and the operating parameters discussed hereinafter are dependent on the particular application and the choice of materials.

In the prior art "speed-tip" technique of joining thermoplastic members discussed above, a welding rod of thermoplastic material is fed through a nozzle. One type of this prior art welding rod is an extruded HDPE rod having a diameter of 5 millimetres. This welding rod is an ideal solid core 11 for the present invention. The solid core 11 should be homogeneous and free of any significant voids as discussed hereinafter.

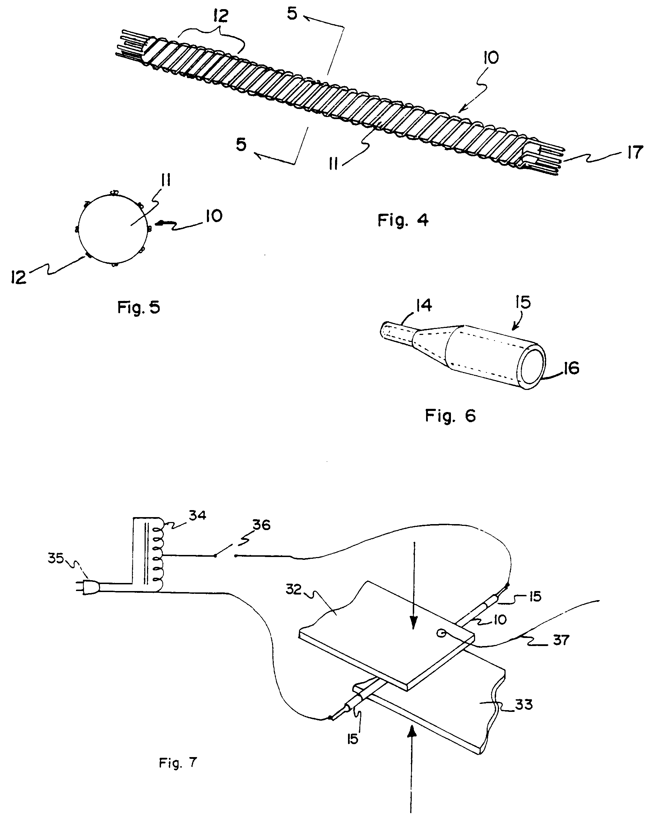

To form the welding rod 10 with the 5 millimetre diameter HDPE solid core 11, the resistance element 12 is comprised of sixteen strands of stainless steel wire 17 having a diameter of 0.1524 mm (0.006 inch). As shown more clearly in Figure 4, the wires 17 are wound in eight pairs in a helical pattern around the solid core 11. The size and number of wires 17 of the resistance element 12 are factors which dictate the length of this helical pattern along the length of the solid core 11. In the present example, one revolution of a pair of wires 17 is approximately 31.75 mm (1.25 inches) long. In all cases the configuration of the resistance element 12 should provide a distribution of energy from the power source to cause uniform heating of the solid core 11.

Often the limiting factor in the use of the welding rod 10 is the voltage permissible at the welding site. For safety reasons the voltage is often limited to a maximum of 120 volts. Accordingly the current is dependent on the resistance of the resistance element 12. One relatively large diameter wire 17 cannot be used as a resistance element 12 since it would tend to overheat and cause the solid core 11 to burn. By using a number of smaller diameter wires 17 distributed evenly around the solid core 11, there is better heat distribution in the solid core 11 without overheating and greater lengths of welds are achievable than would be possible with a single conductor.

Once the wires 17 are wound around the solid core 11, the resistance element 12 is embedded in the solid core 11 by holding the wires 17 in tension while softening the surface of the solid core 11 so that the wires 17 are drawn below the surface of the solid core 11. By embedding the resistance element 12, it is not exposed to the atmosphere on the surface of the solid core 11. If the resistance element 12 is exposed to the atmosphere when connected to a power source, a hot spot can be created and the thermoplastic material of the solid core 11 and the thermoplastic members being welded will be burned. There are also advantages in the handling of the welding rod 10 having an embedded resistance element 12. It will be understood by those skilled in the art that the wires 17 might catch and get tangled if they are exposed on the surface of the solid core 11. Furthermore, the exposed wires 17 are more likely to get covered by dirt, grease, and other contaminants which could adversely affect the quality of the weld. A welding rod 10 which has an embedded resistance element 12 is more readily cleaned of these contaminants.

While it is desirable to embed the resistance element 12 in the solid core 11, it is also desirable to control the depth of the embedding. If the resistance element 12 is embedded too deeply, the element 12 is too remote from the surfaces being welded. The thermoplastic material immediately surrounding the resistance element 12 will burn before the thermoplastic material of the members being joined can soften, resulting in a poor weld. Moreover the sixteen strands of wire 17 would then begin to act as one larger diameter wire which is also unacceptable as it could cause overheating and therefore burning of the thermoplastic material of the solid core 11. Preferably the resistance element 12 is embedded just below the surface of the solid core 11.

Figure 3 illustrates schematically an apparatus 20 which can be used to form the welding rod 10. The solid core 11 is uncoiled from a core spool 21 and drawn through wire winding machine 22. The wire winding machine 22 winds sixteen wires 17 in eight pairs in a helical pattern about the solid core 11. One revolution of a helix of a pair of wires 17 is approximately 31.75 mm (1.25 inches) long. Figures 4 and 5 show the welding rod 10 in more detail at Stage A of the process of forming the welding rod 10 with the wires 17 wound in a helical pattern about the solid core 11.

The solid core 11 and the resistance element 12 are held in tension and drawn through a heating chamber 25. The tension of the wires 17 and the softening of the solid core 11 cause the resistance element 12 to be drawn below the surface of the solid core 11. Subsequently the welding rod 10 is drawn through a cooling chamber 26 and wound on a welding rod spool 27. In this continuous process of forming the welding rod 10, it is advisable to engage the movement of the core spool 21 with the welding rod spool 27 by a common drive mechanism 28 so that the appropriate tension is maintained throughout the process.

An example of the operating parameters of the apparatus 20 is: the solid core 11 is unwound from the core spool 21 at a rate of 1828.8 to 2133.6 mm (6 to 7 feet)/minute, the heating chamber 25 is controlled at a temperature of 400°C and has a length of 457.2 mm (1.5 feet), and the cooling chamber 26 is a water bath controlled at a temperature of 38°C and has a length of 304.8 mm (1.0 foot).

As shown in Figure 1, the welding rod 10 has a spiral pattern on its surface defining the path of the resistance element 12 as it is embedded in the softened solid core 11. If desired the apparatus 20 can be adapted to include a die (not shown) after the heating chamber 25 to smooth the surface of the welding rod 10 or to mold the welding rod 10 into another shape.

The resistance element 12 could also be formed of wires braided around the solid core 11.

The apparatus 20 could also be adapted to replace the heating chamber 25 with a cross-head extruder (not shown) to apply a thin coating of thermoplastic material over the resistance element 12. This adaptation is particularly useful when the resistance element 12 is braided around the solid core 11 and/or when the solid core 11 is formed of a relatively soft material such as polyvinyl chloride.

Some methods of producing the solid core 11 use a fast cooling cycle of the thermoplastic extrudate. However, if the core 11 is cooled too quickly in the manufacture thereof, the exterior of the core 11 is hardened while the interior is still molten so that voids are formed in the interior of the core 11. Accordingly, as the core 11 is heated in the heating chamber 25 of the apparatus 20 during formation of the welding rod 10, the core 11 collapses at the voids so that the quality of the welding rod 10 is adversely affected. Preferably, the solid core 11 should be homogeneous and free of any significant voids.

In preparation of the welding rod 10 for use in the welding together of thermoplastic members, the required length of welding rod 10 is cut from the welding rod spool 27 and the terminal pins 15 are attached to the resistance element 12 at each end of the welding rod 10.

As shown in Figure 6, the substantially trumpet-shaped terminal pin 15 could be formed of a thin-walled brass tube. Preferably the terminal pin 15 has a mouth 16 of a diameter slightly less than that of the welding rod 10. The terminal pin 15 is heated and the end of the welding rod 10 is forced into the mouth 16 of the terminal pin 15. As the welding rod 10 is further forced into the neck 14 of the terminal pin 15, the thermoplastic material of the solid core 11 is stripped from the resistance element 12. The terminal pin 15 is then crimped onto the resistance element 12 at the neck 14.

Alternatively, a portion of the resistance element 12 at each end of the welding rod 10 is exposed by heating and stripping approximately 76.2 mm (1/4 inch) of the solid core 11 from each end of the welding rod 10 using, for example, a hot air gun and a pair of wire strippers. The exposed wires 17 of the resistance element 12 are then twisted together and a terminal pin 15 is connected to the resistance element 12. After the terminal pin 15 is attached, the thermoplastic at the base of the terminal pin 15 is reheated and the softened thermoplastic is pushed over the base of the terminal pin 15.

These methods of attaching the terminal pin 15 ensure that the resistance element 12 is not exposed to the atmosphere when connected to a power source thereby preventing overheating of the welding rod 10 at that point during welding due to the lack of thermoplastic material to absorb the heat. If these steps are not taken, the thermoplastic material of the members being welded will burn rather than soften on contact with the resistance element 12.

The welding rod 10 is very versatile and can be bent and formed into essentially any shape to effect welding of thermoplastic members. For example, the welding rod 10 can be used to fuse tubular or planar thermoplastic members with butt or lap joints.

Figure 7 illustrates the general procedure for forming a welded lap joint between thermoplastic members. A pair of sheets of thermoplastic material 32 and 33 are positioned on either side of a welding rod 10. A variable voltage transformer 34 is connected to a source of power at 35 and further connected via a suitable switch 36 to the resistance element 12 through the terminal pins 15.

An electrical current is passed through the resistance element 12 and simultaneously pressure is applied above and below on the sheets 32 and 33. As the electrical current passes through the resistance element 12, the solid core 11 and the thermoplastic material of the thermoplastic sheets 32 and 33 in the vicinity of the welding rod 10 begin to soften. The electrical current is continued for a time and intensity to cause the thermoplastic material of the welding rod 10 and the thermoplastic sheets 32 and 33 to soften and melt. After the electrical current is discontinued, the application of pressure above and below the thermoplastic sheets 32 and 33 is continued so that the solid core 11 and the two thermoplastic sheets 32 and 33 fuse and solidify thereby forming a unified weld. The resistance element 12 remains in the weld and reinforces or "stitches" the weld mechanically. Another advantage to having the resistance element 12 in place in the weld is to allow reheating of the weld in the event of a weld failure due to insufficient heat or pressure application during the initial weld cycle.

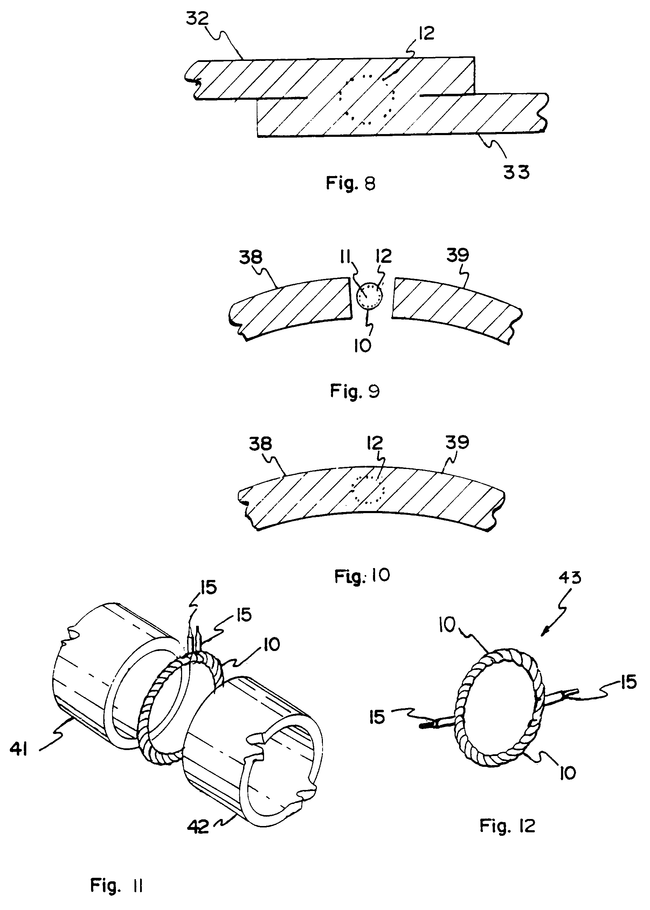

Figure 8 is a cross-sectional view of the weld formed by the process illustrated in Figure 7. As can be seen from this cross-sectional view, the material of the solid core 11 is now indistinguishable from the welded material of the sheets 32 and 33, and the weld is reinforced by the resistance element 12 embedded therein.

Figure 9 illustrates a butt weld between curved members 38 and 39 of, for example, a longitudinally slit thermoplastic pipe. The welding rod 10 is positioned between the curved members 38 and 39. Pressure is applied to urge the edges of the curved members 38 and 39 into contact and an electrical current is passed through the resistance element 12. The weld is completed when the welding rod 10 and curved members 38 and 39 are fused and the resistance element 12 is embedded in the weld. The structure of the weld is such that the solid core 11 becomes part of the body of material of the two curved members 38 and 39 that are joined and the weld is simultaneously reinforced by the presence of the resistance element 12. This latter completed configuration of the butt weld is illustrated in Figure 10.

Figure 11 is a perspective view illustrating the manner in which a pair of tubular thermoplastic members 41 and 42, such as sections of piping, can be welded end to end with a butt joint. The welding rod 10 is formed into a ring shape and is positioned between the tubular members 41 and 42. An electrical current is passed through the resistance element 12 and the tubular members 41 and 42 are pressed together to complete the weld.

Alternatively, referring to Figure 12, a welding ring 43 is used to weld the tubular thermoplastic members, 41 and 42. The welding ring 43 is formed of two welding rods 10, each having a length slightly longer than half of the circumference of the tubular thermoplastic members 41 and 42. The resistance element 12 is exposed at each end of the welding rods 10 by heating and stripping the solid core 11 using, for example, a hot air gun and a pair of wire strippers so that the length of each welding rod 10 is then approximately equal to half of the circumference of the tubular members 41 and 42.

The exposed wires 17 of the resistance element 12 at a first end of the first welding rod 10 are then twisted together with the exposed wires 17 of the resistance element 12 at a first end of the second welding rod 10. Further, the exposed wires 17 of the second ends of the first and second welding rods 10 are also twisted together to form a double welding rod (not shown). The terminal pins 15 are subsequently attached to the resistance element 12. The welding rods 10 are then pulled apart, without separating them from the terminal pins 15, to form the welding ring 43. This type of welding ring 43 is particularly useful in the welding together of large diameter thermoplastic pipe sections and in situations where the available voltage is limited.

The power supply used to effect electrofusion welding of thermoplastic members with the welding rod 10 of the present invention preferably offers control of the current in the range of 0 to 20 amperes. Often the limiting factor in the use of the welding rod 10 is the voltage permissible at the welding site. For safety reasons the voltage is often limited to a maximum of 120 volts. The voltage, then becomes the limiting factor to the length of the weld that can be achieved.

For example a 152.4 mm (6 inch) weld will take the same length of time to complete as a 9.1 m (30 foot) weld at the same current using a 4 volt and a 240 volt source respectively. Furthermore, the length of time required to complete a weld can be varied by changing the current; at lower amperages the required welding time is increased. Generally, the integrity of the weld benefits by using lower amperages for longer periods of time because the heat distribution is improved and overheating of the thermoplastic of the welding rod 10 and the thermoplastic members is less likely.

Preferably, the welding process is conducted at a current between 6 amperes and 15 amperes for the single welding rod 10 and between 12 amperes and 40 amperes for the double welding rod (not shown) or the welding ring 43. The length of time required to effect the weld may be determined by using a temperature probe 37 placed, for example, on the upper surface of the thermoplastic sheet 32 in Figure 7 directly over the welding rod 10. When the temperature probe 37 indicates that the temperature has reached 120°C, the power source 35 is disconnected and the weld is allowed to fuse and solidify while the weld is still under pressure. The thickness of the thermoplastic sheet 32 and the resulting temperature gradients must be compensated for in the determination of temperature as the probe 37 will take longer to detect the temperature when thicker pieces of thermoplastic are welded. It will be understood by those skilled in the art that the conditions at the welding site will affect the time required to complete the welding operation. A single welding rod 10 might require a welding time of eight minutes at 6 amperes or two minutes at 12 amperes.

An alternative approach to the method of welding described herein is to substitute the 0.152 mm (0.006 inch) stainless steel wire 17 of the resistance element 12 with 0.203 mm (0.008 inch) magnetic wire and to use a radio frequency (RF) generator (not shown) to induce a current in the magnetic wire. This method enables the completion of very long welds by simply sliding the RF generator coil along the length of the weld rather than having to supply a series of terminal pins 15 for connection to an electrical power source at various points along the weld.

It is important to apply pressure to the weld during the welding operation. If the welding rod 10 is simply placed between the thermoplastic sheets 32 and 33, it will "snake" or move out of position on application of electrical current. A weight (not shown) placed on the weld holds the thermoplastic sheets 32 and 33 and the welding rod 10 in relative position to each other. Furthermore, it is important to maintain the pressure until the weld is fused and solidified. Depending on the situation, the weld should generally be left to cool under pressure for approximately four minutes. If the pressure is discontinued before the thermoplastic material has solidified, the sheets 32 and 33 and the welding rod 10 will, in fact, tend to separate from each other while in the softened state.

Preferably the weight has a relatively soft base which will conform to the surface of the member being welded. A rigid surface on the base of the weight can effect unequal pressure on both sides of the weld. This problem is compounded if the underlying surface is uneven. The weight should be designed to distribute the load equally along the length of the weld particularly in the case of a relatively long weld. The design of the weight can incorporate an insulating effect, allowing welds to be completed at ambient temperatures below 40°C.

For example, the base of the weight may be comprised of a length of plywood 19.05 mm (3/4 inch) thick and 101.6 mm (4 inches wide) having a layer of 12.7 mm (1/2 inch) thick neoprene rubber attached to its underside. The base is placed over the weld and weights of, for example, 4.53 Kg (10 pounds) per linear 304.8 mm (foot) are then placed on the base. This arrangement, provides even distribution of pressure over the length of the weld.

It is often desirable to pre-attach the welding rod 10 to one of the thermoplastic members to be welded. The present inventors, however, have found that the use of adhesives or double-sided tape to hold the welding rod in position adversely affects the integrity of the weld because the adhesive and double-sided tape act as contaminants which prohibit the desired intermolecular bonding between the thermoplastic members being joined and the welding rod 10.

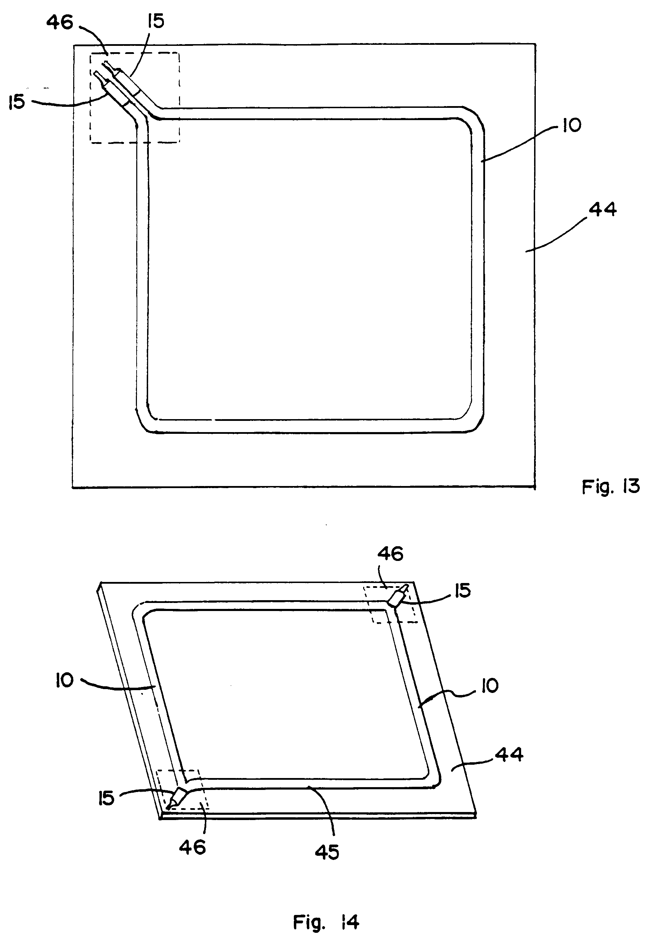

Accordingly, the welding rod 10 should be held in position by fusing the welding rod 10 in part, or in whole, to one of the two thermoplastic members to be joined. Referring now to Figure 13, the length of welding rod 10 can be pre-attached, in any desired shape, to the thermoplastic member 44 either with or without the terminal pins 15 connected to the resistance element 12. This can be done, for example, by using a hot air gun and the prior art "speed-tip" technique to soften the thermoplastic material of the solid core 11 and to tack the welding rod 10 in place.

Referring now to Figure 14 which illustrates the pre-attaching of Figure 13 with an alternative embodiment of the welding rod 10 formed into a patch welding rod 45. This particular patch welding rod 45 is formed in the same manner as the welding ring 43 discussed previously and is particularly, useful for patching holes in sheets of thermoplastic material.

The patch welding rod 45 is formed of two welding rods 10 substantially equal in length. The resistance element 12 is exposed at each end of the welding rods 10 by heating and stripping the solid core 11 using, for example, a hot air gun and a pair of wire strippers. The exposed wires 17 of the resistance element 12 at a first end of the first welding rod 10 are then twisted together with the exposed wires 17 of the resistance element 12 at a first end of the second welding rod 10. The exposed wires 17 of the second ends of the first and second welding rods 10 are then twisted together to form a double welding rod (not shown). The terminal pins 15 are attached to the resistance element 12 and the patch welding rod 45 is formed into the desired shape by pulling apart the pair of welding rods 10 without separating them from the terminal pins 15. The patch welding rod 45 is then pre-attached to the thermoplastic sheet 44 by simultaneously applying a current and pressure.

In both of the applications shown in Figures 13 and 14, it is preferable to pre-attach the rods 10 and 45, respectively, so that the terminal pins 15 do not extend beyond the edge of the thermoplastic member 44 thereby preventing overheating of the exposed metal of the terminal pins 15. This is also a safety feature as contact with the terminal pins 15 can result in an electrical shock.

In applications as shown in Figure 14 where two welding rods 10 are connected at a terminal pin 15, there may be a localized overheating of the patch welding rod 45 at the terminal pins 15. In this case, it is advisable to provide, for example, pieces of foil tape 46 on the opposite side of the thermoplastic sheet 44. The foil tape 46 acts to draw off the heat from the terminal pin 15 and conducts it over the area of the foil tape 46 to prevent burning of the thermoplastic material immediately adjacent the terminal pin 15.

An alternative to pre-attaching the welding rod 10 is to provide a channel (not shown) in one of the thermoplastic members to be joined to hold the welding rod 10 in place during the welding operation.

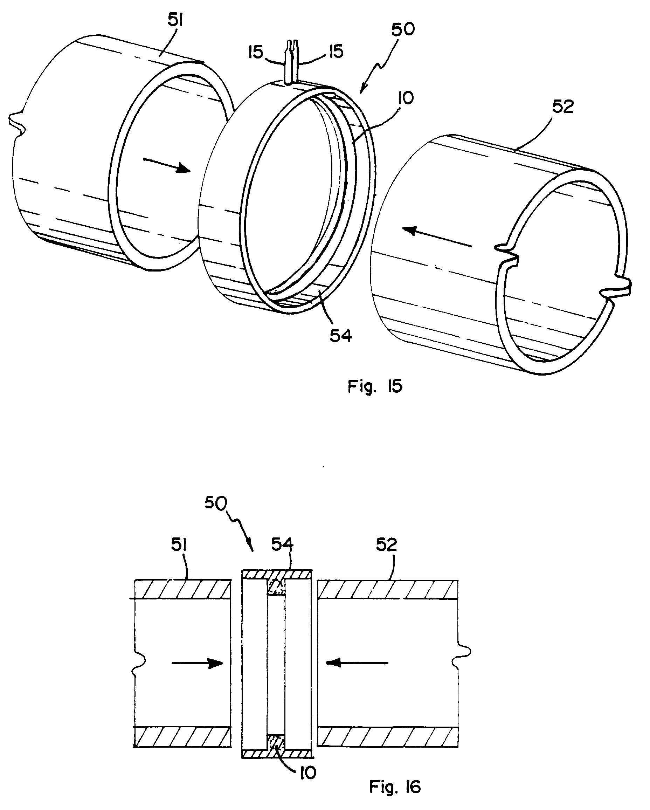

Referring now to Figures 15 and 16, an application of the welding rod 10 and the process of forming a weld between two thermoplastic members is a fusion ring 50 for welding together two sections of pipe 51 and 52 with a butt joint.

The fusion ring 50 is formed of a welding rod 10 and a collar 54 of thermoplastic pipe having an inside diameter substantially equal to the outside diameter of the sections of pipe 51 and 52 being joined. The distance between the mouths 16 of the terminal pins 15 of the welding rod 10 is substantially equal to the inside circumference of the collar 54. The welding rod 10 is shaped along the inside surface of the collar 54 and the terminal pins 15 are pushed to the outside through holes in the collar 54.

The welding ring 53 is then pre-attached to the inside wall of the collar 54. The shaping and pre-attaching of the welding rod 10 can be done, for example, with a pair of non-conductive, heat resistant rings (not shown) which are pressed together as a current is passed through the resistance element 12 of the welding rod 10.

The fusion ring 50 is positioned between the two sections of pipe 51 and 52 as in a socket fitting and the two sections of pipe 51 and 52 are then welded together while pressure is applied to push the pipes 51 and 52 together. The fusion ring 50 supplies a third thermoplastic member, in the form of a collar 54, to the weld. This is particularly advantageous in situations where containment of the fluids transported in the pipe 51 and 52 is a priority.

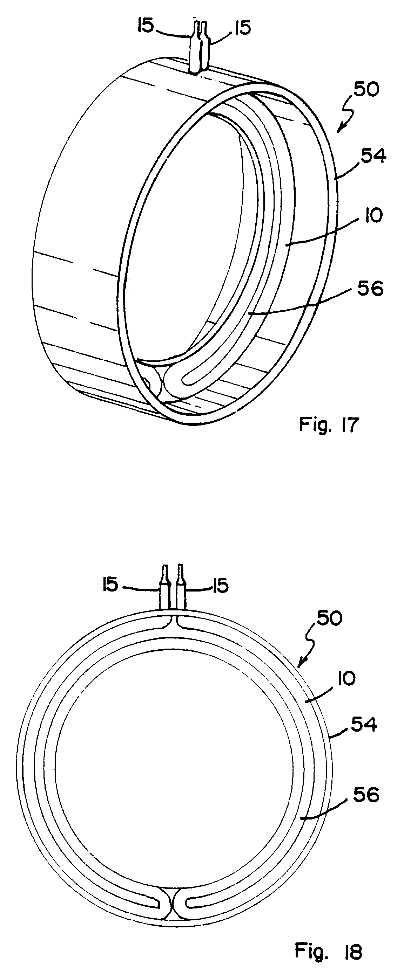

The welding ring 43 of Figure 12, can be substituted for the welding rod 10 in the fusion ring 50 for larger diameter and/or thicker walled pipes. Alternatively, the welding rod 10 could be formed with a loop as shown in Figures 17 and 18. The fusion ring 50 shown in Figures 17 and 18 is formed by pre-attaching the welding rod 10 to a disc 56 of relatively thin thermoplastic material and subsequently attaching the disc 56 to the collar 54. The heat generated by this arrangement of the welding rod 10 sufficiently melts the thermoplastic material of the disc 56, as well as softening and melting the thermoplastic material of the pipes 51 and 52 adjacent the fusion ring 50.

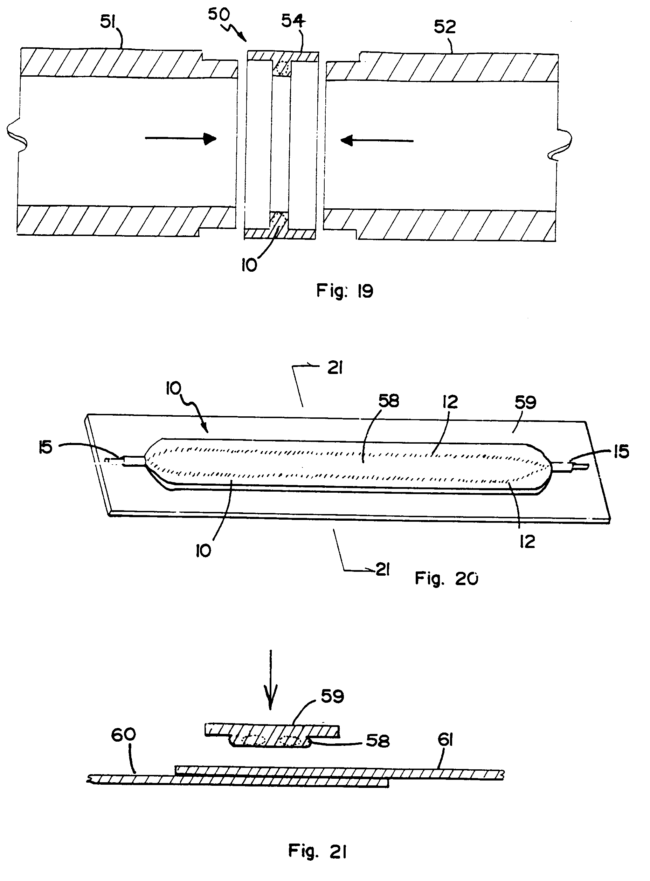

Referring now to Figure 19, the fusion ring 50 may also be formed with a collar 54 of thermoplastic pipe having an outside diameter substantially equal to the outside diameter of the sections of pipe 51 and 52 being joined. The pipe sections 51 and 52 are rabbeted to a depth substantially equal to the wall thickness of the collar 54. This enables the joint between the sections of pipe 51 and 52 to be flush along the inside and outside surfaces of the pipe sections 51 and 52.

The welding rod 10 and process for electric fusion welding of the present invention is very versatile, providing a means for the welding together of different shapes and sizes of thermoplastic members, a number of which have been described herein. Because of this versatility, these welding operations can be carried out in otherwise less than ideal conditions underwater, in ponds, sewers, and the like. Under these conditions, allowances must be made for the dissipation of heat in the aqueous environment.

For example, in the case of the application shown in Figure 14, the patch welding rod 45 is pre-attached to a thermoplastic sheet 44. To reduce the dissipation of heat through the aqueous environment, the pre-attached patch welding rod 45 is flattened by applying pressure and current to the patch welding rod 45. Flattening the patch welding rod 45 increases the contact area between the patch welding rod 45 and the thermoplastic member under repair (not shown). Accordingly, the heat generated in the resistance element 12 during the weld cycle evaporates any moisture remaining between the patch welding rod 45 and the thermoplastic member under repair.

The patch welding rod 45 is flattened after pre-attaching to the thermoplastic sheet 44, for example, by placing the thermoplastic sheet 44, patch welding rod 45 side down, on a sheet of heat resistant glass. A weight, sufficient to cause flattening of the patch welding rod 45 in the softened state before burning of the thermoplastic sheet 44, is placed on top of the thermoplastic sheet 45. For example, the weight could he approximately 20.48 Kg (65 pounds) for an 203.2 mm (8 inch) by 203.2 mm (8 inch) sheet of thermoplastic material. A current of 17 amperes is applied to the resistance element 12 for 2.5 minutes. The power is disconnected and the fused patch welding rod 45 and thermoplastic sheet 44 is left to cool with the weight applied for 2 minutes. The resulting patch has a flattened welding rod 45 with a smooth glass-like finish.

Referring now to Figures 20 and 21, there are also applications where a long thin patch is required, for example, to repair a faulty seam in a pond liner. In this case, it is advisable to use a double welding rod 58.

The double welding rod 58 is formed as described in the discussion of the welding ring 43 and the patch welding rod 45. The resistance element 12 is exposed at each end of a pair of welding rods 10 of substantially equal length by heating and stripping the solid core 11, using, for example, a hot air gun and a pair of wire strippers. The exposed wires 17 of the resistance element 12 at a first end of the first welding rode 10 are then twisted together with the exposed wires 17, of the resistance element 12 at the first end of the second welding rod 10. The exposed wires 17 of the second ends of the first and second welding rods 10 are then twisted together to form a double welding rod 58. The two welding rods 10 are not separated but are pre-attached to the thermoplastic sheet 59 as previously discussed. The double welding rod 58 is flattened by the simultaneous application of pressure and current on a non-stick surface, such as heat resistant glass.

When the flattened patch welding rod 45 and double welding rod 58 are used to effect welds in an aqueous environment, it is important to take into consideration the temperature of the environment, the buoyancy of the weight used to apply pressure, and the dissipation of heat through the aqueous environment. The flattened patch welding rod 45 and double welding rod 58 increase the contact area between the rods 45 and 58 and the thermoplastic member under repair (not shown). Accordingly, the heat generated in the resistance element 12 during the weld cycle evaporates any moisture remaining between the patch welding rod 45 and the thermoplastic member under repair.

Figure 21 illustrates the use of the double welding rod 58 to repair a seam between two thermoplastic sheets 60 and 61. The heat generated by the resistance element 12 is sufficient to fuse the thermoplastic sheet 59, the double welding rod 58, and the two thermoplastic sheets 60 and 61 into a unitary structure. This type of patch repair is very strong and very effective.

## Claims

1. A welding rod (10) for welding adjacent members of thermoplastic material having a core (11) of said thermoplastic material with an electric resistance element (12) wrapped in a helical pattern around said core, said core being solid and homogeneous and of circular cross-section,
characterised in that said resistance element comprises a plurality of pairs of wires (17) braided or wound on said core, and embedded therein proximate the surface thereof.

2. A method of forming a welding rod (10) for welding adjacent members of thermoplastic material, wherein a core (11) of said thermoplastic is wrapped with an electrical resistance element (12), said core (11¦) being formed as a solid homogeneous member of circular cross-section,
characterised in that said resistance element (12) consisting of a plurality of pairs of wires (17) is wrapped around said core, said pairs of wires (17) being held in tension, and said solid core (11) being heated thereby embedding said resistance element in said solid core proximate the surface of said core.

3. A method of forming a welding rod (10) for welding adjacent members of thermoplastic material as claimed in claim 2, wherein said step of wrapping a resistance element (12) around said solid core (11) comprises braiding said plurality of pairs of wires (17) around said solid core (11).

4. An apparatus for forming a welding rod for welding adjacent members of thermoplastic material comprising:
a drive means (28) connected to a supply (21) of a solid homogeneous core (11) of said thermoplastic material,
a means (12) for winding a plurality of pairs of wires,
a means for holding said plurality of wires in tension, and a heating chamber (25), whereby said solid core (11) is fed through said means (22) for winding, said plurality of pairs of wires (17) are wound in a helical pattern around said solid core (11), and said plurality of wires (17) are embedded while in tension into said heated solid core (11) proximate the surface of said solid core.

5. A method of welding adjacent members (32, 33, 38, 39) of a thermoplastic material wherein a welding rod (10) having a core (11) of said thermoplastic material wrapped with an electric resistance element (12) is positioned between said adjacent members, an electric current is caused to flow in said electric resistance element (12), and said members (32, 33, 38, 39) are pressed together, said core (11) being formed as a solid homogeneous core of circular cross-section,
characterized in that said electric resistance element (12) comprises a plurality of pairs of wires (17) wound in a helical pattern around said core (11) and embedded proximate the surface of said core, said welding rod (10) is formed into the shape of the portions of the facing surfaces of said adjacent members (32, 33, 38, 39) to be welded; said current is applied for a time and intensity sufficient to cause said core (11) and portions of said members (32, 33, 38, 39) to soften and fuse, and said pressure is maintained until said members and said core are solidified.

6. A method of welding adjacent members of a thermoplastic material as claimed in claim 5, characterised in that the further step of providing a heat dissipation means (46) at the connection between the current source and said resistance element is included.

7. A method of welding adjacent members of a thermoplastic material as claimed in claim 5, characterised in that said current is induced by a radio frequency field.

8. A method of welding adjacent members (44) of a thermoplastic material comprising the steps of:
providing a welding rod (10) having a solid homogeneous core (11) of said thermoplastic material and a resistance element (12) embedded proximate the surface of said solid core, said resistance element (12) comprising a plurality of pairs of wires (17) braided or wound on the core (11),
forming said welding rod (10) into the shape of the portions of the facing surfaces of said adjacent members to be welded,
positioning said welding rod (10) in contact with a first of said adjacent members (44) of said thermoplastic material,
causing an electrical current in said resistance element,
applying pressure to said first member (44) such that said first member is in contact with said welding rod (10), said current being applied to said resistance element (12) for a time and intensity sufficient to cause said solid core (11) of said welding rod and portions of said first member (44) proximate said welding rod to soften and fuse,
discontinuing said current, and
maintaining said pressure until said solid core (11) of said welding rod (10) and said portions of said first member (44) are fused and solidified, whereby said welding rod is pre-attached to said first member and thereafter welding one or more other thermoplastic members onto said welding rod pre-attached to said first member.

9. A method of welding adjacent members of a thermoplastic material as claimed in claim 8, further including the step of providing a heat dissipation means (46) at each connection between the current source and said resistance element (12).

10. A method of welding adjacent members of a thermoplastic material as claimed in claim 8, wherein said current is generated by a radio frequency field.

11. A method of welding adjacent members (44) of a thermoplastic material as claimed in claim 8, wherein the welding of one or more other thermoplastic members onto said welding rod (10) pre-attached to said first member comprises the steps of:
positioning said welding rod (10) pre-attached to said first member (44) on a second thermoplastic member,
causing an electrical current in said resistance element,
applying pressure to said first and second members such that, the facing surfaces of said first and second members are in contact with said welding rod (10) said current being applied to said resistance element (12) for a time and intensity sufficient to cause said solid core (11) of said welding rod (10) and portions of said first and second members proximate said welding rod to soften and melt,
discontinuing said current,
and maintaining said pressure until said welding rod and said first and second members are fused and solidified.

12. A method of welding adjacent members of a thermoplastic material as claimed in claim 11, further including the step of providing a heat dissipation means (46) at each connection between the current source and said resistance element (12).

13. A method of welding adjacent members of a thermoplastic material as claimed in claim 11, wherein said current is generated by a radio frequency field.

14. A method of welding adjacent members of a thermoplastic material as claimed in claim 8, wherein said welding of one or more other thermoplastic members onto said welding rod pre-attached to said first member (54) comprises:
positioning said welding rod pre-attached to said first member (54) between a second (50) and a third (52) of said adjacent members of said thermoplastic material,
causing an electrical current to flow in said resistance element,
applying pressure to said second (51) and third (52) members such that the facing surfaces of said second and third members are in contact with said welding rod, said current being applied to said resistance element (12) for a time and intensity sufficient to cause said solid core (11) of said welding rod and portions of said first and second and third members proximate said welding rod to soften and fuse,
discontinuing said current,
and maintaining said pressure until said members and welding rod are fused and solidified.

15. A method of welding adjacent members of a thermoplastic material as claimed in claim 14, further including the step of providing a heat dissipation means at each connection between the current source and said resistance element.

16. A method of welding adjacent members of a thermoplastic material as claimed in claim 14, wherein said current is generated by a radio frequency field.

## Patentansprüche

1. Ein Schweißstab (10) zum Schweißen benachbarter Teile aus thermoplastischem Material, der einen Kern (11) aus besagtem thermoplastischen Material aufweist, wobei um besagten Kern herum ein elektrisches Widerstandselement (12) in einem schraubenförmigen Muster herumgewickelt ist, wobei besagter Kern massiv und homogen ist und einen kreisförmigen Querschnitt aufweist,
dadurch gekennzeichnet, daß besagtes Widerstandselement mehrere Paare von Drähten (17) umfaßt, die auf besagten Kern geflochten oder gewickelt und nächst der Oberfläche desselben darin eingebettet sind.

2. Ein Verfahren zur Herstellung eines Schweißstabes (10) zum Schweißen benachbarter Teile aus thermoplastischem Material, wobei ein Kern (11) aus besagtem Thermoplast mit einem elektrischen Widerstandselement (12) umwickelt wird, wobei besagter Kern (11) als ein massives homogenes Teil mit kreisförmigem Querschnitt ausgebildet ist,
dadurch gekennzeichnet, daß besagtes Widerstandselement (12), das aus mehreren Paaren von Drähten (17) besteht, um besagten Kern herumgewickelt wird, wobei besagte Paare von Drähten (17) unter Spannung gehalten werden und besagter massiver Kern (11) erhitzt wird, wodurch besagtes Widerstandselement in besagtem massiven Kern nächst der Oberfläche besagten Kerns eingebettet wird.

3. Ein Verfahren zur Herstellung eines Schweißstabes (10) zum Schweißen benachbarter Teile aus thermoplastischem Material nach Anspruch 2, wobei besagter Schritt des Wickelns eines Widerstandselementes (12) um besagten massiven Kern (11) herum das Flechten besagter mehrerer Paare von Drähten (17) um besagten massiven Kern (11) herum umfaßt.

4. Eine Vorrichtung zur Herstellung eines Schweißstabes zum Schweißen benachbarter Teile aus thermoplastischem Material, welche umfaßt:
ein Antriebsmittel (28), das mit einem Vorrat (21) eines massiven homogenen Kerns (11) aus besagtem thermoplastischen Material verbunden ist,
ein Mittel (12) zum Wickeln mehrerer Paare von Drähten,
ein Mittel zum Halten besagter mehreren Drähte unter Spannung und eine Heizkammer (25), wodurch besagter massiver Kern (11) durch besagtes Mittel (22) zum Wickeln zugeführt wird, besagte mehrere Paare von Drähten (17) in einem schraubenförmigen Muster um besagten massiven Kern (11) herumgewickelt und besagte mehrere Drähte (17) in besagten erhitzten massiven Kern (11) nächst der Oberfläche besagten massiven Kerns eingebettet werden, während sie unter Spannung stehen.

5. Ein Verfahren zum Schweißen benachbarter Teile (32, 33, 38, 39) aus einem thermoplastischem Material, bei dem ein Schweißstab (10), der einen Kern (11) aus besagtem thermoplastischen Material aufweist, der mit einem elektrischen Widerstandselement (12) umwickelt ist, zwischen besagten benachbarten Teilen angeordnet wird, bewirkt wird, daß ein elektrischer Strom in besagtem elektrischen Widerstandselement (12) fließt, und besagte Teile (32, 33, 38, 39) zusammengedrückt werden, wobei besagter Kern (11) als ein massiver homogener Kern mit kreisförmigem Querschnitt ausgebildet ist, dadurch gekennzeichnet, daß besagtes elektrisches Widerstandselement (12) mehrere Paare von Drähten (17) umfaßt, die in einem schraubenförmigen Muster um besagten Kern (11) herumgewickelt und nächst der Oberfläche besagten Kerns eingebettet sind, daß besagter Schweißstab (10) ausgeformt ist in der Form der Bereiche der zugewandten Flächen besagter benachbarter Teile (32, 33, 38, 39), die geschweißt werden sollen; daß besagter Strom für eine Zeit und mit einer Stärke eingespeist wird, die ausreichend sind, um zu bewirken, daß besagter Kern (11) und Bereiche besagter Teile (32, 33, 38, 39) erweichen und verschmelzen, und daß besagter Druck aufrechterhalten wird, bis besagte Teile und besagter Kern fest geworden sind.

6. Ein Verfahren zum Schweißen benachbarter Teile aus einem thermoplastischem Material nach Anspruch 5, dadurch gekennzeichnet, daß der weitere Schritt der Bereitstellung eines Wärmeabstrahlungsmittel (46) an der Verbindungsstelle zwischen der Stromquelle und besagtem Widerstandselement eingeschlossen ist.

7. Ein Verfahren zum Schweißen benachbarter Teile aus einem thermoplastischem Material nach Anspruch 5, dadurch gekennzeichnet, daß besagter Strom durch ein Hochfrequenzfeld induziert wird.

8. Ein Verfahren zum Schweißen benachbarter Teile (44) aus einem thermoplastischem Material, welches die Schritte umfaßt:
Bereitstellen eines Schweißstabes (10), der einen massiven homogenen Kern (11) aus besagtem thermoplastischen Material und ein Widerstandselement (12), das nächst der Oberfläche besagten massiven Kerns eingebettet ist, aufweist, wobei besagtes Widerstandselement (12) mehrere Paare von Drähten (17) umfaßt, die auf den Kern (11) geflochten oder gewickelt sind,
Ausformen besagten Schweißstabes (10) zu der Form der Bereiche der zugewandten Flächen besagter benachbarten Teile, die geschweißt werden sollen,
Anordnen besagten Schweißstabes (10) in Kontakt mit einem ersten von besagten benachbarten Teilen (44) aus besagtem thermoplastischen Material,
Bewirken eines elektrischen Stromes in besagtem Widerstandselement,
Beaufschlagen besagten ersten Teils (44) mit Druck, so daß besagtes erstes Teil in Kontakt mit besagtem Schweißstab (10) steht, wobei besagter Strom in besagtes Widerstandselement (12) für eine Zeit und mit einer Stärke eingespeist wird, die ausreichend sind, um zu bewirken, daß besagter massiver Kern (11) besagten Schweißstabes und Bereiche besagten ersten Teils (44) nächst besagtem Schweißstab erweichen und verschmelzen,
Unterbrechen besagten Stromes und
Aufrechterhalten besagten Druckes, bis besagter massiver Kern (11) besagten Schweißstabes (10) und besagte Bereiche besagten ersten Teils (44) verschmolzen und fest geworden sind, wodurch besagter Schweißstab an besagten ersten Teil vorbefestigt wird, und anschließendes Schweißen eines oder mehrerer weiterer thermoplastischer Teile auf besagten, an besagtem ersten Teil vorbefestigten Schweißstab.

9. Ein Verfahren zum Schweißen benachbarter Teile aus einem thermoplastischen Material nach Anspruch 8, das weiter den Schritt der Bereitstellung eines Wärmeabstrahlungsmittels (46) an jeder Verbindungsstelle zwischen der Stromquelle und besagtem Widerstandselement (12) einschließt.

10. Ein Verfahren zum Schweißen benachbarter Teile aus einem thermoplastischen Material nach Anspruch 8, wobei besagter Strom von einem Hochfrequenzfeld erzeugt wird.

11. Ein Verfahren zum Schweißen benachbarter Teile (44) aus einem thermoplastischen Material nach Anspruch 8, wobei das Schweißen von einem oder mehreren weiteren thermoplastischen Teilen auf besagten, an besagtem ersten Teil vorbefestigten Schweißstab (10) die Schritte umfaßt:
Anordnen besagten, an besagtem ersten Teil (44) vorbefestigten Schweißstabes (10) auf einem zweiten thermoplastischen Teil,
Bewirken eines elektrischen Stromes in besagtem Widerstandselement,
Beaufschlagen besagten ersten und besagten zweiten Teils mit Druck, so daß die zugewandten Flächen besagten ersten und besagten zweiten Teils in Kontakt mit besagtem Schweißstab (10) stehen, wobei besagter Strom in besagtes Widerstandselement (12) für eine Zeit und mit einer Stärke eingespeist wird, die ausreichend sind, um zu bewirken, daß besagter massive Kern (11) besagten Schweißstabes (10) und Bereiche besagten ersten und besagten zweiten Teils nächst besagtem Schweißstab erweichen und schmelzen,
Unterbrechen besagten Stromes und
Aufrechterhalten besagten Druckes, bis besagter Schweißstab und besagtes erste und besagtes zweite Teil verschmolzen und fest geworden sind.

12. Ein Verfahren zum Verschweißen benachbarter Teile aus einem thermoplastischen Material nach Anspruch 11, welches weiter den Schritt der Bereitstellung eines Wärmeabstrahlungsmittel (46) an jeder Verbindungsstelle zwischen der Stromquelle und besagtem Widerstandselement (12) einschließt.

13. Ein Verfahren zum Schweißen benachbarter Teile aus einem thermoplastischen Material nach Anspruch 11, wobei besagter Strom von einem Hochfrequenzfeld erzeugt wird.

14. Ein Verfahren zum Schweißen benachbarter Teile aus einem thermoplastischen Material nach Anspruch 8, wobei besagtes Schweißen von einem oder mehreren weiteren thermoplastischen Teilen auf besagten, an besagtem ersten Teil (54) vorbefestigten Schweißstab umfaßt:
Anordnen besagten, an besagtem ersten Teil (54) vorbefestigten Schweißstabes zwischen einem zweiten (50) und einem dritten (52) von besagten benachbarten Teilen aus besagtem thermoplastischen Material,
Bewirken, daß ein elektrischer Strom in besagtem Widerstandselement fließt,
Beaufschlagen besagten zweiten (51) und dritten (52) Teils mit Druck, so daß die zugewandten Flächen besagten zweiten und dritten Teils in Kontakt mit besagtem Schweißstab stehen, wobei besagter Strom in besagtes Widerstandselement (12) über eine Zeit und mit einer Stärke eingespeist wird, die ausreichend sind, um zu bewirken, daß besagter massive Kern (11) besagten Schweißstabes und Bereiche besagten ersten und zweiten und dritten Teils nächst besagtem Schweißstab erweichen und schmelzen,
Unterbrechen besagten Stromes und
Aufrechterhalten besagten Druckes, bis besagte Teile und besagter Schweißstab verschmolzen und fest geworden sind.

15. Ein Verfahren zum Schweißen benachbarter Teile aus einem thermoplastischen Material nach Anspruch 14, das weiter den Schritt der Bereitstellung eines Wärmeabstrahlungsmittels an jeder Verbindungsstelle zwischen der Stromquelle und besagtem Widerstandselement einschließt.

16. Ein Verfahren zum Schweißen benachbarter Teile aus einem thermoplastischen Material nach Anspruch 14, wobei besagter Strom von einem Hochfrequenzfeld erzeugt wird.

## Revendications

1. Une baguette d'apport (10) pour la soudure d'éléments adjacents composés d'un matériau thermoplastique présentant un noyau (11) composé dudit matériau thermoplastique et un élément de résistance électrique (12) enroulé selon un schéma hélicoïdal autour dudit noyau, ledit noyau étant solide et homogène et présentant une section transversale circulaire,
caractérisée en ce que ledit élément de résistance comporte une pluralité de paires de fils (17) tressés ou enroulés sur ledit noyau, et insérés à l'intérieur, à proximité de la surface de celui-ci.

2. Un procédé de formation d'une baguette d'apport (10) pour la soudure d'éléments adjacents composés d'un matériau thermoplastique, dans lequel un noyau (11) dudit matériau thermoplastique est enroulé avec un élément de résistance électrique (12), ledit noyau (11) étant formé en tant qu'élément solide et homogène présentant une section transversale circulaire,
caractérisé en ce que ledit élément de résistance (12) comportant une pluralité de paires de fils (17) est enroulé autour dudit noyau, lesdites paires de fils (17) étant maintenues sous tension, et ledit noyau solide (11) étant chauffé en insérant pour ce faire ledit élément de résistance dans ledit noyau solide à proximité de la surface dudit noyau.

3. Un procédé de formation d'une baguette d'apport (10) pour la soudure d'éléments adjacents composés d'un matériau thermoplastique selon la revendication 2, dans lequel ladite étape consistant à enrouler un élément de résistance (12) autour dudit noyau solide (11) comprend le tressage de ladite pluralité de paires de fils (17) autour dudit noyau solide (11).

4. Un dispositif de formation d'une baguette d'apport pour la soudure d'éléments adjacents composés d'un matériau thermoplastique comprenant :
un moyen d'entraînement (28) relié à une alimentation (21) d'un noyau homogène solide (11) dudit matériau thermoplastique,
un moyen (12) destiné à enrouler une pluralité de paires de fils,
un moyen destiné à maintenir ladite pluralité de fils sous tension, et une chambre chauffante (25), ledit noyau solide (11) étant amené à travers ledit moyen (22) destiné à enrouler, ladite pluralité de paires de fils (17) étant enroulés selon un schéma hélicoïdal autour dudit noyau solide (11), et ladite pluralité de fils (17) étant insérés alors qu'ils demeurent sous tension à l'intérieur dudit noyau solide chauffé (11) à proximité de la surface dudit noyau solide.

5. Un procédé de soudure d'éléments adjacents (32, 33, 38, 39) composés d'un matériau thermoplastique, dans lequel une baguette d'apport (10) présentant un noyau (11) composé dudit matériau thermoplastique enroulé avec un élément de résistance électrique (12) est positionnée entre lesdits éléments adjacents, un courant électrique est généré de façon à traverser ledit élément de résistance électrique (12), et lesdits éléments (32, 33, 38, 39) sont comprimés les uns contre les autres, ledit noyau (11) étant formé en tant que noyau homogène et solide présentant une section transversale circulaire,
caractérisé en ce que ledit élément de résistance électrique (12) comporte une pluralité de paires de fils (17) enroulés autour dudit noyau (11) selon un schéma hélicoïdal et insérés à proximité de la surface dudit noyau, ladite baguette d'apport (10) étant formée pour prendre la forme des parties des surfaces de contact desdits éléments adjacents (32, 33, 38, 39) à souder ; ledit courant étant appliqué pendant un temps et selon une intensité suffisants pour entraîner un ramollissement et une fusion dudit noyau (11) et desdites parties desdits éléments (32, 33, 38, 39), et ladite pression étant maintenue jusqu'à ce que lesdits éléments et ledit noyau soient solidifiés.

6. Un procédé de soudure d'éléments adjacents composés d'un matériau thermoplastique selon la revendication 5, caractérisé en ce que l'étape suivante destinée à fournir un moyen de dissipation de la chaleur (46) au niveau de la jonction entre la source de courant et ledit élément de résistance est incluse.

7. Un procédé de soudure d'éléments adjacents composés d'un matériau thermoplastique selon la revendication 5, caractérisé en ce que ledit courant est induit par un champ haute fréquence.

8. Un procédé de soudure d'éléments adjacents (44) composés d'un matériau thermoplastique comprenant les étapes consistant :
à fournir une baguette d'apport (10) présentant un noyau homogène solide (11) composé dudit matériau thermoplastique et un élément de résistance (12) inséré à proximité de la surface dudit noyau solide, ledit élément de résistance (12) comportant une pluralité de paires de fils (17) tressés ou enroulés sur le noyau (11),
à former ladite baguette d'apport (10) selon la forme des parties des surfaces de contact desdits éléments adjacents à souder,
à positionner ladite baguette d'apport (10) en contact avec un premier desdits éléments adjacents (44) dudit matériau thermoplastique,
à générer un courant électrique traversant ledit élément de résistance,
à appliquer une pression sur ledit premier élément (44) de telle sorte que ledit premier élément est en contact avec ladite baguette d'apport (10), ledit courant étant appliqué au dit élément de résistance (12) pendant un temps et selon une intensité suffisants pour entraîner un ramollissement et une fusion dudit noyau solide (11) de ladite baguette d'apport et desdites parties dudit premier élément (44) à proximité de ladite baguette d'apport,
à discontinuer ledit courant, et
à maintenir ladite pression jusqu'à ce que ledit noyau solide (11) de ladite baguette d'apport (10) et lesdites parties dudit premier élément (44) soient fondus et solidifiés, ladite baguette d'apport étant pré-attachée au dit premier élément, puis à souder un ou plusieurs autre(s) élément(s) thermoplastique(s) sur ladite baguette d'apport pré-attachée au dit premier élément.

9. Un procédé de soudure d'éléments adjacents composés d'un matériau thermoplastique selon la revendication 8, comprenant en outre l'étape consistant à fournir un moyen de dissipation de la chaleur (46) au niveau de chaque jonction entre la source de courant et ledit élément de résistance (12).

10. Un procédé de soudure d'éléments adjacents composés d'un matériau thermoplastique selon la revendication 8, dans lequel ledit courant est généré par un champ haute fréquence.

11. Un procédé de soudure d'éléments adjacents (44) composés d'un matériau thermoplastique selon la revendication 8, dans lequel le soudage d'un ou de plusieurs autre(s) élément(s) thermoplastique(s) sur ladite baguette d'apport (10) pré-attachée au dit premier élément comprend les étapes consistant :
à positionner ladite baguette d'apport (10) pré-attachée au dit premier élément (44) sur un second élément thermoplastique,
à générer un courant électrique dans ledit élément de résistance,
à appliquer une pression sur lesdits premier et second éléments de telle sorte que les surfaces de contact desdits premier et second éléments sont en contact avec ladite baguette d'apport (10), ledit courant étant appliqué au dit élément de résistance (12) pendant un temps et selon une intensité suffisants pour entraîner un ramollissement et une fusion dudit noyau solide (11) de ladite baguette d'apport (10) et desdites parties desdits premier et second éléments à proximité de ladite baguette d'apport,
à discontinuer ledit courant, et
à maintenir ladite pression jusqu'à ce que ladite baguette d'apport et lesdits premier et second éléments soient fondus et solidifiés.

12. Un procédé de soudure d'éléments adjacents composés d'un matériau thermoplastique selon la revendication 11, comprenant en outre l'étape consistant à fournir un moyen de dissipation de la chaleur (46) au niveau de chaque jonction entre la source de courant et ledit élément de résistance (12).

13. Un procédé de soudure d'éléments adjacents composés d'un matériau thermoplastique selon la revendication 11, dans lequel ledit courant est généré par un champ haute fréquence.

14. Un procédé de soudure d'éléments adjacents composés d'un matériau thermoplastique selon la revendication 8, dans lequel ledit soudage d'un ou de plusieurs autre(s) élément(s) thermoplastique(s) sur ladite baguette d'apport pré-attachée au dit premier élément (54) comprend les étapes consistant :
à positionner ladite baguette d'apport pré-attachée au dit premier élément (54) entre un second (50) et un troisième (52) desdits éléments adjacents composés dudit matériau thermoplastique,
à générer un courant électrique traversant ledit élément de résistance,
à appliquer une pression sur lesdits second (51) et troisième (52) éléments de telle sorte que les surfaces de contact desdits second et troisième éléments sont en contact avec ladite baguette d'apport, ledit courant étant appliqué au dit élément de résistance (12) pendant un temps et selon une intensité suffisants pour entraîner un ramollissement et une fusion dudit noyau solide (11) de ladite baguette d'apport et desdites parties desdits premier, second et troisième éléments à proximité de ladite baguette d'apport,
à discontinuer ledit courant,
et à maintenir ladite pression jusqu'à ce que lesdits éléments et ladite baguette d'apport soient fondus et solidifiés.

15. Un procédé de soudure d'éléments adjacents composés d'un matériau thermoplastique selon la revendication 14, comprenant en outre l'étape consistant à fournir un moyen de dissipation de la chaleur au niveau de chaque jonction entre la source de courant et ledit élément de résistance.

16. Un procédé de soudure d'éléments adjacents composés d'un matériau thermoplastique selon la revendication 14, dans lequel ledit courant est généré par un champ haute fréquence.
